(19) Europäisches Patentamt
European Patent Office
Office européen des brevets

(11) **EP 4 319 283 A1**

(12) **EUROPEAN PATENT APPLICATION**
published in accordance with Art. 153(4) EPC

(43) Date of publication:
07.02.2024 Bulletin 2024/06

(51) International Patent Classification (IPC):
*H04W 28/26* (2009.01)

(21) Application number: 22778738.9

(22) Date of filing: 24.03.2022

(52) Cooperative Patent Classification (CPC):
H04W 28/26; H04W 36/06; H04W 36/36;
H04W 76/28

(86) International application number:
PCT/CN2022/082804

(87) International publication number:
WO 2022/206555 (06.10.2022 Gazette 2022/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 02.04.2021 CN 202110362182

(71) Applicant: Datang Mobile Communications
Equipment Co., Ltd.
Beijing 100085 (CN)

(72) Inventors:
• ZHANG, Huiying
  Beijing 100085 (CN)
• ZHAO, Yali
  Beijing 100085 (CN)
• ZHAI, Haitao
  Beijing 100085 (CN)

(74) Representative: Maiwald GmbH
Engineering
Elisenhof
Elisenstrasse 3
80335 München (DE)

(54) **COMMUNICATION METHOD FOR SIDELINK INTERFACE, TERMINAL DEVICE, AND STORAGE MEDIUM**

(57) Provided are a communication method for a sidelink interface, a terminal device, and a storage medium. The method includes: determining that a selected resource is outside an active time of a sidelink (SL) discontinuous reception/discontinuous transmission (DRX/DTX) corresponding to a sidelink interface destination Layer-2 ID; determining to perform a resource selection or reselection. Embodiments of this disclosure can ensure that the sidelink resource is always within the active time of the sidelink interface DRX/DTX configuration, thereby avoiding waste of resources.

FIG. 4

**Description**

**CROSS REFERENCE OF RELATED APPLICATION**

The present application claims priority to Chinese patent application No. CN 202110362182.7 filed with CNIPA on April 2, 2021, a disclosure of which is incorporated herein by reference in its entirety.

**TECHNICAL FIELD**

The present disclosure relates to the field of communication technology, and in particular to a communication method for a sidelink interface, a terminal device, and a storage medium.

**BACKGROUND**

According to discontinuous reception (DRX), a terminal may enter an inactive state when data signals are not received continuously, to achieve the effects of saving power, extending battery standby time and improving battery life.
In order to save power, a discontinuous reception/discontinuous transmission (DRX/DTX) mechanism has been introduced for sidelink (SL) interfaces. Resources used by transmission through the SL interface are allocated in either a base station scheduling mode or a terminal autonomous selection mode. In the terminal autonomous selection mode, a transmitting terminal selects transmitting resources from a resource pool, and cyclically reserves and uses the selected resources to transmit data. After the DRX/DTX mechanism is introduced, resources originally selected before DRX/DTX activation may be in a sleep period of DRX/DTX, or if the DRX/DTX configuration changes, the resources selected before the change may also be in a sleep period after the change. In these cases, if the transmitting terminal still uses the originally selected resources to transmit data, a receiving terminal cannot receive the data, which tends to cause waste of resources.

**SUMMARY**

The present disclosure provides a communication method for a sidelink interface, a terminal device and a readable storage medium, to at least solve the technical problem of waste of sidelink resources.
In a first aspect, a communication method for a sidelink interface is provided. The method is performed by a transmitting terminal, and includes: determining that a selected resource is outside an active time of a sidelink (SL) discontinuous reception/discontinuous transmission (DRX/DTX) corresponding to a sidelink interface destination Layer-2 ID; determining to perform a resource selection or reselection.
In one possible implementation, the resource reselection is performed by executing a first operation as follows: optionally, cleaning up the selected resource; selecting a resource within the active time of the SL DRX/DTX corresponding to the sidelink interface destination Layer-2 ID as a new selected resource; notifying a physical layer of the active time of the SL DRX/DTX corresponding to the sidelink interface destination Layer-2 ID, and/or the new selected resource and/or a resource reservation interval.
In another possible implementation, the selecting the resource within the active time of the SL DRX/DTX corresponding to the sidelink interface destination Layer-2 ID as the new selected resource includes:
selecting, in a case that a resource pool where the selected resource is located includes the resource within the active time of the SL DRX/DTX corresponding to the sidelink interface destination Layer-2 ID, the resource within the active time of the SL DRX/DTX corresponding to the sidelink interface destination Layer-2 ID from the resource pool as the new selected resource; selecting, in a case that the resource pool where the selected resource is located does not include the resource within the active time of the SL DRX/DTX corresponding to the sidelink interface destination Layer-2 ID, a new resource pool, and selecting the resource within the active time of the SL DRX/DTX corresponding to the sidelink interface destination Layer-2 ID from the new resource pool as the new selected resource, where the new resource pool includes the resource within the active time of the SL DRX/DTX corresponding to the sidelink interface destination Layer-2 ID.
In yet another possible implementation, the first operation further includes: setting the resource reservation interval.
In yet another possible implementation, the resource reservation interval notified to the physical layer is a newly set resource reservation interval.
In yet another possible implementation, the determining to perform the resource reselection includes: determining, in a case that a process corresponding to the selected resource has to-be-transmitted data corresponding to the sidelink interface destination Layer-2 ID, to perform the resource reselection.
In yet another possible implementation, the communication method for the sidelink interface further includes:

determining, in a case that no corresponding timer is in a running state in one cycle of the SL DRX/DTX corresponding to the sidelink interface destination Layer-2 ID, that the transmitting terminal enters an sleep period of the SL DRX/DTX corresponding to the sidelink interface destination Layer-2 ID, where the corresponding timer is at least one of a first timer, a second timer or a third timer.

In yet another possible implementation, data transmission is performed in one cycle of the SL DRX/DTX corresponding to the sidelink interface destination Layer-2 ID by executing a second operation as follows: entering, by the transmitting terminal, the active time of the SL DRX/DTX corresponding to the sidelink interface destination Layer-2 ID after starting the first timer; performing data transmission on the new selected resource, and starting the second timer; starting the third timer after the data transmission; entering, by the transmitting terminal, the sleep period of the SL DRX/DTX corresponding to the sidelink interface destination Layer-2 ID in a case that the first timer, the second timer and the third timer all expire.

In yet another possible implementation, the starting the third timer includes: starting a fourth timer; and starting the third timer after the fourth timer expires.

In yet another possible implementation, the communication method for the sidelink interface further includes: performing, in a next cycle of the SL DRX/DTX corresponding to the sidelink interface destination Layer-2 ID and on a next new selected resource determined based on the resource reservation interval, the data transmission through the second operation.

In yet another possible implementation, in a case that there is continuous data transmission, the communication method for the sidelink interface further includes: performing a third operation repeatedly until there is no data for transmission and when the first timer, the second timer and the third timer all expire, entering, by the transmitting terminal, the sleep period of the SL DRX/DTX corresponding to the sidelink interface destination Layer-2 ID, wherein the third operation includes: performing the data transmission on the next new selected resource determined based on the resource reservation interval, and restarting the second timer; starting the third timer after the data transmission.

In yet another possible implementation, the communication method for the sidelink interface further includes: determining that the selected resource is within the active time of the SL DRX/DTX corresponding to the sidelink interface destination Layer-2 ID, retaining the selected resource, and performing the data transmission on the selected resource.

In yet another possible implementation, in a case that the resource reservation interval is inconsistent with the cycle of the SL DRX/DTX corresponding to the sidelink interface destination Layer-2 ID, the communication method for the sidelink interface further includes: starting the first timer in the next cycle of the SL DRX/DTX corresponding to the sidelink interface destination Layer-2 ID, and entering, by the transmitting terminal, the active time of the SL DRX/DTX corresponding to the sidelink interface destination Layer-2 ID; cleaning up, in a case that the next selected resource is outside the active time of the SL DRX/DTX corresponding to the sidelink interface destination Layer-2 ID, the selected resource; performing the resource reselection within a time range of the first timer, and performing the data transmission on the new selected resource.

In yet another possible implementation, the communication method for the sidelink interface further includes: setting the resource reservation interval; notifying the physical layer of the newly set resource reservation interval.

In yet another possible implementation, the active time of the SL DRX/DTX corresponding to the sidelink interface destination Layer-2 ID is included in a time range of any one running timer of the following timers: a first timer, a second timer and a third timer.

In yet another possible implementation, the first timer is an SL discontinuous reception on duration timer (drx-on duration Timer), the second timer is an SL discontinuous reception inactivity timer (drx-Inactivity Timer), the third timer is an SL discontinuous reception retransmission timer (drx-Retransmission Timer).

In a second aspect, a terminal device is provided, which includes: a processing module, configured to: determine that a selected resource is outside an active time of a sidelink (SL) discontinuous reception/discontinuous transmission (DRX/DTX) corresponding to a sidelink interface destination Layer-2 ID; determine to perform a resource selection or reselection.

In a third aspect, a terminal device is provided, which includes: a memory, configured to store a computer program; a transceiver, configured to transmit and receive data under the control of the processor; a processor, configured to read the computer program in the memory and perform the following operations: determining that a selected resource is outside an active time of a sidelink (SL) discontinuous reception/discontinuous transmission (DRX/DTX) corresponding to a sidelink interface destination Layer-2 ID; determining to perform a resource selection or reselection.

In one possible implementation, the processor is configured to perform the resource reselection by executing a first operation as follows: optionally, cleaning up the selected resource; selecting a resource within the active time of the SL DRX/DTX corresponding to the sidelink interface destination Layer-2 ID as a new selected resource; notifying a physical layer of the active time of the SL DRX/DTX corresponding to the sidelink interface destination Layer-2 ID, and/or the new selected resource and/or a resource reservation interval.

In another possible implementation, the processor is specifically configured to select, in a case that a resource pool where the selected resource is located includes the resource within the active time of the SL DRX/DTX corresponding to the sidelink interface destination Layer-2 ID, the resource within the active time of the SL DRX/DTX corresponding to the sidelink interface destination Layer-2 ID from the resource pool as the new selected resource; select, in a case that the resource pool where the selected resource is located does not include the resource within the active time of the SL DRX/DTX corresponding to the sidelink interface destination Layer-2 ID, a new resource pool, and select the resource within the active time of the SL DRX/DTX corresponding to the sidelink interface destination Layer-2 ID from the new resource pool as the new selected resource, where the new resource pool includes the resource within the active time of the SL DRX/DTX corresponding to the sidelink interface destination Layer-2 ID.

In yet another possible implementation, the processor is specifically configured to determine, in a case that a process corresponding to the selected resource has to-be-transmitted data corresponding to the sidelink interface destination Layer-2 ID, to perform the resource reselection.

In yet another possible implementation, the processor is further configured to determine, in a case that no corresponding timer is in a running state in one cycle of the SL DRX/DTX corresponding to the sidelink interface destination Layer-2 ID, that the transmitting terminal enters a sleep period of the SL DRX/DTX corresponding to the sidelink interface destination Layer-2 ID, where the corresponding timer is at least one of a first timer, a second timer or a third timer.

In yet another possible implementation, the processor is configured to perform the data transmission in one cycle of the SL DRX/DTX corresponding to the sidelink interface destination Layer-2 ID by executing a second operation as follows: entering the active time of the SL DRX/DTX corresponding to the sidelink interface destination Layer-2 ID after starting the first timer; performing data transmission on the new selected resource, and starting the second timer; starting the third timer after the data transmission; entering the sleep period of the SL DRX/DTX corresponding to the sidelink interface destination Layer-2 ID in a case that the first timer, the second timer and the third timer all expire.

In yet another possible implementation, the processor is further configured to perform, in a next cycle of the SL DRX/DTX corresponding to the sidelink interface destination Layer-2 ID and on a next new selected resource determined based on the resource reservation interval, the data transmission through the second operation.

In yet another possible implementation, in a case that there is continuous data transmission, the processor is further configured to: perform a third operation repeatedly until there is no data for transmission and when the first timer, the second timer and the third timer all expire, enter the sleep period of the SL DRX/DTX corresponding to the sidelink interface destination Layer-2 ID, wherein the third operation includes: performing data transmission on the next new selected resource determined based on the resource reservation interval, and restarting the second timer; starting the third timer after the data transmission.

In yet another possible implementation, the processor is further configured to: determine that the selected resource is within the active time of the SL DRX/DTX corresponding to the sidelink interface destination Layer-2 ID, retain the selected resource, and perform the data transmission on the selected resource.

In yet another possible implementation, in a case that the resource reservation interval is inconsistent with the cycle of the SL DRX/DTX corresponding to the sidelink interface destination Layer-2 ID, the processor is further configured to:

start the first timer in the next cycle of the SL DRX/DTX corresponding to the sidelink interface destination Layer-2 ID, and enter the active time of the SL DRX/DTX corresponding to the sidelink interface destination Layer-2 ID; clean up the selected resource in a case that the next selected resource is outside the active time of the SL DRX/DTX corresponding to the sidelink interface destination Layer-2 ID; perform the resource reselection within a time range of the first timer, and perform the data transmission on the new selected resource.

In yet another possible implementation, the active time of the SL DRX/DTX corresponding to the sidelink interface destination Layer-2 ID is included in a time range of any one running timer of the following timers: a first timer, a second timer and a third timer.

In yet another possible implementation, the first timer is an SL discontinuous reception on duration timer (drx-on duration TimerSL), the second timer is an SL discontinuous reception inactivity timer (drx-Inactivity TimerSL), the third timer is an SL discontinuous reception retransmission timer (drx-Retransmission TimerSL).

In a fourth aspect, a processor-readable storage medium is provided, the processor-readable storage medium stores a computer program, and the computer program is configured to be executed by a processor to implement the communication method for the sidelink interface shown in the first aspect of the present disclosure.

The beneficial effects brought by the technical solution provided by the present disclosure are at least as follows: when the selected resource is outside the active time of the SL DRX/DTX corresponding to the sidelink interface destination Layer-2 ID, resource reselection is performed to ensure that the sidelink resource is always within the active time of the sidelink interface DRX/DTX configuration, thereby avoiding waste of resources.

## BRIEF DESCRIPTION OF THE DRAWINGS

In order to more clearly illustrate the technical solutions in the embodiments of the present disclosure, drawings accompanying the description of the embodiments of the present disclosure will be briefly introduced below.

FIG. 1 is a schematic view of a conventional cellular network structure;

FIG. 2 is a schematic view of a principle of discontinuous reception (DRX);

FIG. 3 is a schematic view of a sidelink network structure;

FIG. 4 is a flowchart of a communication method for a sidelink interface provided by an embodiment of the present disclosure;

FIG. 5 is a timing diagram of a communication method for the sidelink interface provided by an embodiment of the present disclosure;

FIG. 6 is a flowchart of the communication method for the sidelink interface provided by an embodiment of the present disclosure;

FIG. 7 is a timing diagram of a communication method for the sidelink interface provided by another embodiment of the present disclosure;

FIG. 8 is a flowchart of the communication method for the sidelink interface provided by another embodiment of the present disclosure;

FIG. 9 is a timing diagram of a communication method for the sidelink interface provided by yet another embodiment of the present disclosure;

FIG. 10 is a flowchart of the communication method for the sidelink interface provided by yet another embodiment of the present disclosure; and

FIG. 11 is a schematic structural view of a terminal device provided by an embodiment of the present disclosure.

## DETAILED DESCRIPTION

Embodiments of the present disclosure are described in detail below, examples of the embodiments are shown in the drawings, where the same or similar reference numerals denote the same or similar elements or elements having the same or similar functions throughout. The embodiments described below by referring to the drawings are exemplary only for explaining the present disclosure, and are not construed as limiting the present disclosure.

Those skilled in the art may understand that unless otherwise stated, the singular forms "a", "an", "said" and "the" used herein may also encompass a plural concept. It should be further understood that the word "including" used in the specification of the present disclosure refers to the presence of the feature, integer, step, operation, element and/or component, but does not exclude the presence or addition of one or more other features, integers, steps, operations, elements, components, and/or groups thereof. It should be understood that when an element is referred to as being "connected" or "coupled" to another element, it can be directly connected or coupled to the other element or intervening elements may also be present. Additionally, "connected" or "coupled" as used herein may include wireless connection or wireless coupling. The term "and/or" used herein includes all items or any one item of one or more associated listed items and all combinations thereof.

In order to make the purpose, technical solution and advantages of the present disclosure clearer, implementations according to the present disclosure will be further described in detail below in conjunction with the drawings.

The technical solutions provided by the embodiments of the present disclosure may be applied to various systems, especially 5G systems. For example, an applicable system may be a global system of mobile communication (GSM) system, a code division multiple access (CDMA) system, a wideband code division multiple access (WCDMA) system, a general packet radio service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G New Radio (NR) system, etc. These various systems include a terminal device and a network side device. The system may also include a core network part, such as an evolved packet system (EPS), a 5G system (5GS), and the like.

First, several terms involved in the present disclosure are introduced and explained.

The terminal device involved in the embodiments of the present disclosure may be a device that provides voice and/or data connectivity to a user, a handheld device with a radio connection function, or other processing devices connected to a radio modem. In different systems, the name of the terminal device may be different. For example, in a 5G system, the terminal device may be called user equipment (UE). The radio terminal device can communicate with one or more core networks (CNs) via the radio access network (RAN), and the radio terminal device may be a mobile terminal device, such as a mobile phone (or called a "cellular" telephone) and a computer with a mobile terminal device, such as portable, pocket, hand-held, computer built-in or vehicle-mounted mobile apparatuses, which exchange voice and/or data with the radio access network. For example, personal communication service (PCS) phones, cordless phones, session initiated protocol (SIP) phones, wireless local loop (WLL) stations, personal digital assistant (PDA) and other devices. Radio terminal device can also be called a system, a subscriber unit, a subscriber station, a mobile station, a mobile, a remote station, an access point, a remote terminal device, an access terminal device, a user terminal device, a user agent, and a user device, which are not limited in the embodiments of the present disclosure.

1. Conventional cellular network communication system

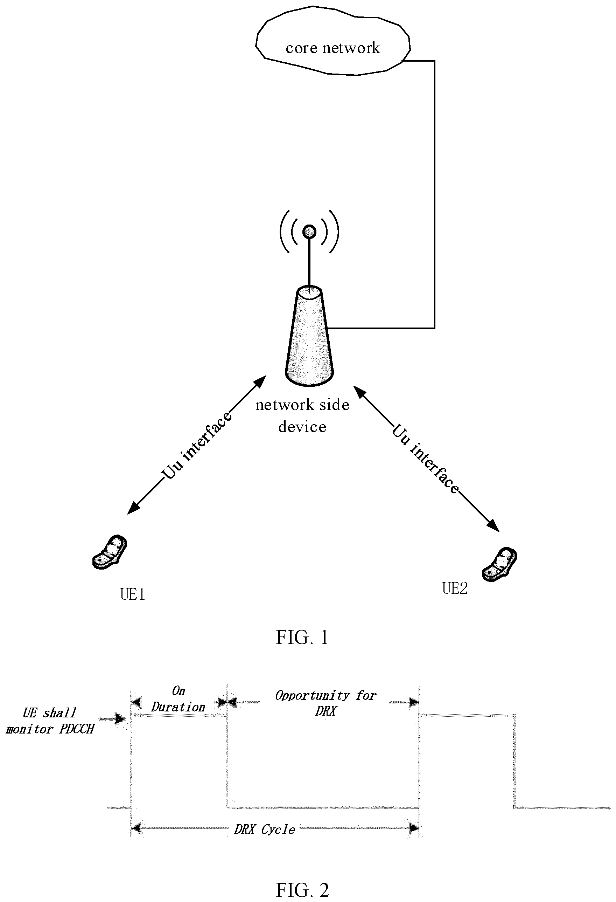

A conventional cellular network communication is shown in FIG. 1, and the uplink/downlink data and control information are transmitted between the terminal and the network side device through the Uu interface.

In a mobile communication system based on shared channels, for example, in LTE, the transmission of uplink and downlink data is controlled by the base station (eNB) scheduler. When the scheduler determines to schedule a certain UE, the scheduler will notify, through a control channel, the terminal of the resource on which data is sent or received. The terminal (UE) monitors the control channel. When the UE has detected scheduling information involving itself, the UE completes transmitting (uplink) or receiving (downlink) of data according to the instructions on the control channel. In an activated state, since the terminal is not certain about when the eNB will schedule the terminal, a common operation mode is: the terminal continuously monitors the control channel and parses each subframe containing its downlink scheduling control channel, to determine whether the terminal is scheduled. This operation mode can achieve higher efficiency in a case that a quantity of data at the terminal is large and the terminal may be frequently scheduled. However, for some services, data arrives less frequently, resulting in a less number of times the terminal is scheduled. If the terminal still continuously monitors the control channel, its power consumption will undoubtedly increase. In order to solve the power consumption problem, the cellular network communication system adopts a DRX operation mode. In this operation mode, the terminal cyclically monitors the control channel, to ensure that data transmission can be performed efficiently, without causing waste of resources, thereby achieving the purpose of saving power.

2. DRX mechanism

The DRX adopts a cyclic configuration, and the length of a DRX cycle is uniquely assigned to the terminal by radio resource control (RRC) signaling. The DRX mechanism includes a monitoring period and an inactive period. As shown in FIG. 2, at the beginning of each DRX cycle, the terminal will first enter a short continuous receiving state, which is called on duration (monitoring period), and the duration of the monitoring period is determined by a drx-onDurationTimer (drx-monitoring period timer). The drx-onDurationTimer specifies a time period for monitoring a physical downlink control channel (PDCCH) starting from the beginning of the DRX cycle, and is in units of millisecond (ms). Within the on duration, the terminal needs to monitor the PDCCH to determine whether a resource is allocated to itself.

If the terminal does not encounter data scheduling and does not perform data transmission during the on duration, the terminal will enter an inactive state until the next DRX cycle, and the terminal will no longer receive downlink transmission until the drx-onDurationTimer starts. If the terminal receives the scheduling command and downlink data transmission during the on duration, the terminal further starts the following timers.

drx-InactivityTimer (DRX inactivity timer): the timer starts at the next symbol following the reception of a PDCCH scheduling data, and the terminal monitors the PDCCH continuously when the timer is running; when the terminal determines that the drx-InactivityTimer expires or after the terminal receives a DRX Command media access control control element (DRX Command MAC CE) indicating a forced termination, the drx-InactivityTimer is stopped.

Short DRX cycle Timer: in order to better meet the arrival characteristics of data traffics, the cellular network communication system supports the configuration of two types of DRX cycles: long cycle and short cycle. The on duration timer of the two types of cycles is the same, but the two types of cycles are different in terms of sleep time. In the short cycle, the sleep time is relatively shorter, and the UE can monitor the control channel again sooner. Long cycle is mandatory and is the initial state of the DRX process, while short cycle is optional. A short DRX cycle timer specifies a duration of the short cycle. After the short DRX cycle timer expires, the UE will use the Long cycle.

HARQ round trip time (RTT) Timer: the timer is categorized into a drx-HARQ-RTT-TimerDL and a drx-HARQ-RTT-TimerUL, and aims to enable the UE not to monitor the control channel before the next retransmission arrives, thereby achieving better power-saving effect. Taking downlink as an example, this timer is started when the first symbol following the PUCCH transmission of a UE related process initiates. If the data in the corresponding hybrid automatic repeat request (HARQ) process is unsuccessfully decoded (UE feedbacks a negative acknowledgement (NACK)) after the previous HARQ transmission, the UE starts a drx-RetransmissionTimerDL after the DL HARQ RTT Timer expires. If the data in the corresponding HARQ process is successfully decoded (UE feedbacks an acknowledgement (ACK)) after the previous HARQ transmission, the UE does not start the drx-RetransmissionTimerDL after the drx-HARQ-RTT-TimerDL expires. If only drx-HARQ-RTT-TimerDL is currently running, the UE does not monitor the control channel.

HARQ retransmission Timer: the timer is categorized into a drx-RetransmissionTimerDL and a drx-RetransmissionTimerUL. Taking downlink as an example, during running of the DL HARQ retransmission Timer, the UE monitors for the control signaling, and waits for the retransmission scheduling of the corresponding HARQ process.

It can be seen from the above-mentioned process that, if any one of the On duration Timer, HARQ retransmission Timer and Inactivity Timer is running, the UE will monitor the control channel. The time during which the UE monitors the control channel is also called active time. In an LTE system, the active time is affected by other factors besides the DRX timer, and the UE active time of LTE Rel-8 includes the following time:

1) running time of drx-onDurationTimer or drx-InactivityTimer or drx-RetransmissionTimerDL or drx-RetransmissionTimerUL or ra-ContentionResolutionTimer;
2) the time for the UE to wait for a PDCCH sent by the base station after the UE sends an uplink scheduling request (SR);
3) the time for the UE in a contention-free random access procedure to wait for a PDCCH scheduled by a cell-radio network temporary identifier (C-RNTI) after the UE receives a random access response (RAR).

Generally, a calculation process of the onduration in a DRX mechanism is as follows:

1) for short DRX cycle, the calculation formula of onduration is as follows:

$$[(\text{SFN} * 10) + \text{subframe number}] \text{ modulo } (\text{shortDRX-Cycle}) = (\text{drxStartOffset}) \text{ modulo } (\text{shortDRX-Cycle});$$

2) for long DRX cycle, the calculation formula of onduration is as follows:

$$[(\text{SFN} * 10) + \text{subframe number}] \text{ modulo } (\text{longDRX-Cycle}) = \text{drxStartOffset}:$$

where

system frame number (SFN): the index of the current radio frame;

Subframe number: the index of the current subframe;

shortDRX-Cycle: short DRX cycle;

longDRX-Cycle: long DRX cycle;

drxStartOffset: an offset value configured by RRC signaling, which is used to indicate the subframe from which the DRX cycle starts; for example, if the cycle has 10 subframes, then the range of drxStartOffset is 0 to 9; and if the cycle has 20 subframes, then the range of drxStartOffset is 0~19.

3. Sidelink and its resource selection and reservation mechanism

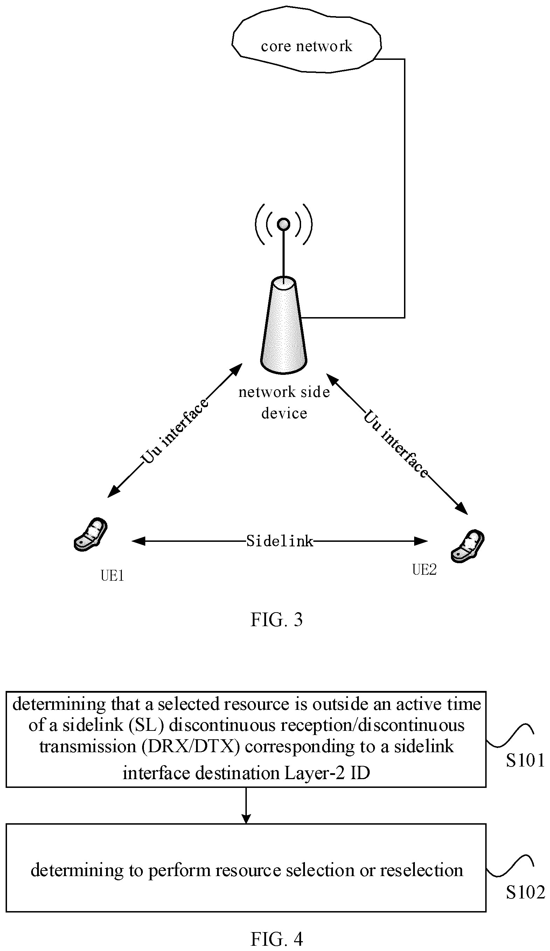

Sidelink refers to a transmission mode in which adjacent terminals within a short distance can perform data transmission through a sidelink (also called direct communication link). The radio interface corresponding to the sidelink is called a sidelink interface, also called a direct communication interface, as shown in FIG. 3.
The terminal of the sidelink interface autonomously selects transmitting resources (resources used for transmitting data). The terminal maintains a counter SL_RESOURCE_RESELECTION_COUNTER, and each time UE selects a resource, the counter is reset, and takes a value between [5, 15] randomly (the resource reservation cycle is greater than or equal to 100ms) or takes a value between $\left[ 5 \times \left[ \frac{100}{\max(20, \ P_{\text{rsvp\_TX}})} \right], \ 15 \times \left[ \frac{100}{\max(20, \ P_{\text{rsvp\_TX}})} \right] \right]$ (the resource reservation cycle is less than 100ms). The UE maintains one counter for each existing resource reservation process independently, and each time the UE uses the resource of the process to perform data transmission, the counter is decremented by 1. When the counter returns to 0 or is equal to 1, if the process still has data to be transmitted, the UE needs to select a random number between [0, 1], and when the random number is less than or equal to a threshold SL-ProbResourceKeep configured by an upper layer, the UE triggers a resource reselection. The $P_{\text{rsvp\_TX}}$ is a transmission resource reservation interval.
The selected resource before DRX/DTX activation may be in the DRX/DTX sleep period; or, when the DRX/DTX configuration changes, the selected resource before the change may also be in the sleep period after the change; or, when the DRX/DTX cycle is not consistent with the resource reservation cycle, it is also possible that the selected resource is in the DRX/DTX sleep period. In these cases, if the transmitting UE still uses the originally selected resource to transmit data, then the receiving UE cannot receive the data, which also causes waste of resources.

The communication method for the sidelink interface, the terminal device and the computer-readable storage medium provided by the present disclosure aim at at least solving the above-mentioned technical problems in the related art.

To this end, the present disclosure provides a communication method for a sidelink interface, wherein the UE that activates the SL DRX/DTX corresponding to the sidelink interface destination Layer-2 ID determines whether the selected resource of each process is within the active time of DRX/DTX, and performs the resource reselection for a process of which the selected resource is outside the active time of the SL DRX/DTX corresponding to the sidelink interface destination Layer-2 ID.

Specifically, in a technical solution provided by an embodiment of the present disclosure, whether the resource reselection needs to be performed is determined based on time domain resources; when it is determined that the reselection is required, time domain resource and frequency domain resource need to be reselected, and the selected time domain resource should be within the active time. The specific implementation of resource reselection adopts a conventional mechanism, and for the sake of brevity of description, details thereof are not repeated here.

The technical solution of the present disclosure and how the technical solution of the present disclosure solves the above-mentioned technical problems will be described in detail below with reference to specific embodiments. The following specific embodiments may be combined with each other, and the same or similar concepts or processes may not be repeated in some embodiments. The embodiments of the present disclosure will be described below in conjunction with the drawings.

In an embodiment of the present disclosure, a communication method for a sidelink interface is provided. As shown in FIG. 4, the method is performed by a transmitting terminal, and includes:

S101. determining that a selected resource is outside an active time of a sidelink (SL) discontinuous reception/discontinuous transmission (DRX/DTX) corresponding to a sidelink interface destination Layer-2 ID; in this disclosure, "selected resource" refers to "reserved resource (selected SL grant)", "sidelink interface destination Layer-2 ID" refers to the destination Layer-2 identity (ID) to which the transmitting UE transmits data through the sidelink interface; and the sidelink means that the source Layer-2 ID and destination Layer-2 ID identify a sidelink, the destination is emphasized here because for the transmitting UE, the source ID belongs to the transmitting UE; DRX is directed to a specific link, and the DRX active time is also directed to a specific link;

S102. determining to perform the resource selection or reselection.

That is to say, the transmitting terminal UE that activates the SL DRX/DTX corresponding to the sidelink interface destination Layer-2 ID determines whether the selected resource of each process is within the active time of DRX/DTX, for the process of which the selected resource is outside the active time of the SL DRX/DTX corresponding to the sidelink interface destination Layer-2 ID, the resource reselection is performed, so that the selected resource of the process is within the active time of the SL DRX/DTX corresponding to the sidelink interface destination Layer-2 ID, so as to ensure that the sidelink resource is always within the active time of the sidelink interface DRX/DTX configuration, thereby avoiding waste of resources.

Specifically, in this embodiment, the resource reselection may be performed by performing a first operation as follows: optionally, cleaning up the selected resource; selecting a resource within the active time of the SL DRX/DTX corresponding to the sidelink interface destination Layer-2 ID as a new selected resource; notifying a physical layer of the active time of the SL DRX/DTX corresponding to the sidelink interface destination Layer-2 ID, and/or the new selected resource and/or a resource reservation interval.

That is to say, when performing resource reselection, it is necessary to clean up the originally selected resource saved by the UE, then select the resource within the active time of the SL DRX/DTX corresponding to the sidelink interface destination Layer-2 ID, and then notify the physical layer of the new selected resource and the resource reservation interval, so that the UE saves the new selected resource and uses the new selected resource for data transmission based on the resource reservation interval.

In some embodiments, the selected resource may be reselected in the following manners:

first manner: if the resource pool where the selected resource is located includes the resource within the active time of the SL DRX/DTX corresponding to the sidelink interface destination Layer-2 ID, the resource within the active time of the SL DRX/DTX corresponding to the sidelink interface destination Layer-2 ID is selected from the resource pool as a new selected resource;

second manner: if the resource pool where the selected resource is located does not include the resource within the active time of the SL DRX/DTX corresponding to the sidelink interface destination Layer-2 ID, a new resource pool is selected, and the resource within the active time of the SL DRX/DTX corresponding to the sidelink interface destination Layer-2 ID is selected from the new resource pool as the new selected resource, where the new resource pool includes the resource within the active time of the SL DRX/DTX corresponding to the sidelink interface destination Layer-2 ID.

In some embodiments, the process of performing the resource reselection may further include: setting a resource reservation interval.

Specifically, in this embodiment, the resource reservation interval notified to the physical layer is a newly set resource reservation interval.

That is to say, when the reselection process sets the resource reservation interval, the resource reservation interval needs to be indicated to the physical layer, such that the available selected resource is determined based on the new resource reservation interval.

In some embodiments, S 102 may specifically include: determining, in a case that the process corresponding to the selected resource has to-be-transmitted data corresponding to the sidelink interface destination Layer-2 ID, to perform the resource reselection.

That is to say, the transmitting UE that activates the SL DRX/DTX corresponding to the sidelink interface destination Layer-2 ID determines whether the selected resource of each process is within the active time of DRX/DTX, and for a process of which the selected resource is outside the active time of the SL DRX/DTX corresponding to the sidelink interface destination Layer-2 ID, when the process has data to be transmitted, the resource reselection is performed.

In some embodiments, in one cycle of the SL DRX/DTX corresponding to the sidelink interface destination Layer-2 ID, if no corresponding timer is in a running state, the transmitting UE enters a sleep period of the SL DRX/DTX corresponding to the sidelink interface destination Layer-2 ID, where the corresponding timer is at least one of a first timer, a second timer or a third timer.

Specifically, in this embodiment, the first timer is the discontinuous reception on duration timer of the SL (drx-on duration TimerSL), the second timer is the discontinuous reception inactivity timer of the SL (drx-Inactivity TimerSL), and the third timer is the discontinuous reception retransmission timer of the SL (drx-Retransmission TimerSL).

In the embodiments of the present disclosure, the active time of the SL DRX/DTX corresponding to the sidelink interface destination Layer-2 ID means that any one of the first timer, the second timer and the third timer is running.

In some embodiments, data transmission may be performed in one cycle of the SL DRX/DTX corresponding to the sidelink interface destination Layer-2 ID by executing a second operation as follows: entering, by the transmitting UE, the active time of the SL DRX/DTX corresponding to the sidelink interface destination Layer-2 ID after starting the first timer; performing data transmission on the new selected resource, and starting the second timer; starting the third timer after the data transmission; entering, in a case that the first timer, the second timer and the third timer all expire, the sleep period of the SL DRX/DTX corresponding to the sidelink interface destination Layer-2 ID.

That is to say, when data transmission is performed on the new selected resource, a plurality of timers may be set, so as to ensure correct data transmission and achieve the purpose of saving power.

It should be noted that, after the data transmission, if the data transmission is successful, an ACK message fed back by the receiving terminal may be received, and when the ACK is received, the third timer is stopped; if no feedback from the receiving terminal is received or an NACK message fed back by the receiving terminal is received, it indicates that the data transmission has failed, and data retransmission is required, then data retransmission is performed in the next cycle of the SL DRX/DTX corresponding to the sidelink interface destination Layer-2 ID.

The second timer is the discontinuous reception inactivity timer of the sidelink (drx-InactivityTimerSL); the third timer is the discontinuous reception retransmission timer of the sidelink (drx-RetransmissionTimerSL).

Specifically, in this embodiment, the process of starting the third timer may include: starting a fourth timer; and starting the third timer after the fourth timer expires.

That is to say, the time when the third timer is started may be determined by setting the fourth timer. The fourth timer is drx-HARQ-RTT-TimerSL.

In some embodiments, the communication method for the sidelink interface may further include: performing, in a next cycle of the SL DRX/DTX corresponding to the sidelink interface destination Layer-2 ID and on a next new selected resource determined based on the resource reservation interval, the data transmission through the second operation.

In this embodiment, when the reset resource preset interval is consistent with the cycle of DRX/DTX, the new selected resource may be directly used for data transmission in each subsequent DRX/DTX cycle. The first timer is the discontinuous reception on duration timer of the sidelink (drx-OndurationTimerSL).

In some embodiments, in a case that there is continuous data transmission, the communication method for sidelink interface may further includes: performing a third operation repeatedly until there is no data for transmission, and when the first timer, the second timer and the third timer all expire, entering the sleep period of the SL DRX/DTX corresponding to the sidelink interface destination Layer-2 ID. The third operation includes: transmitting data on the next new selected resource determined based on the resource reservation interval, and restarting the second timer; starting the third timer after the data transmission.

In this embodiment, after one data transmission is performed in one DRX/DTX cycle, if the transmitting UE still has data to transmit, the above-mentioned data transmission process will be performed repeatedly on the subsequent new selected resource until there is no data for transmission, and when the first timer, the second timer and the third timer all expire, the transmitting UE enters the sleep period of the SL DRX/DTX corresponding to the sidelink interface destination Layer-2 ID.

In some embodiments, the communication method for the sidelink interface may further include: in case that it is determined that the selected resource is within the active time of the SL DRX/DTX corresponding to the sidelink interface destination Layer-2 ID, retaining the selected resource, and performing the data transmission on the selected resource.

In some embodiments, in a case that the resource reservation interval is inconsistent with the cycle of the SL DRX/DTX corresponding to the sidelink interface destination Layer-2 ID, the communication method for sidelink interface may further include: starting the first timer in the next cycle of the SL DRX/DTX corresponding to the sidelink interface destination Layer-2 ID, and entering, by the transmitting terminal, the active time of the SL DRX/DTX corresponding to the sidelink interface destination Layer-2 ID; cleaning up the selected resource in a case that the next selected resource is outside the active time of the SL DRX/DTX corresponding to the sidelink interface destination Layer-2 ID; performing the resource reselection within a time range of the first timer, and performing the data transmission on the new selected resource.

In this embodiment, in a case that the original resource preset interval is inconsistent with the new cycle of DRX/DTX, resource reselection needs to be performed when data transmission is performed in the next DRX/DTX cycle.

Specifically, in this embodiment, the resource reservation interval may also be reset, and the physical layer is notified of the newly set resource reservation interval.

In this embodiment, the resource reservation interval may be reset, so that the new resource reservation interval is consistent with the cycle of DRX/DTX, so that the new selected resource is directly used for data transmission in the subsequent DRX/DTX cycle.

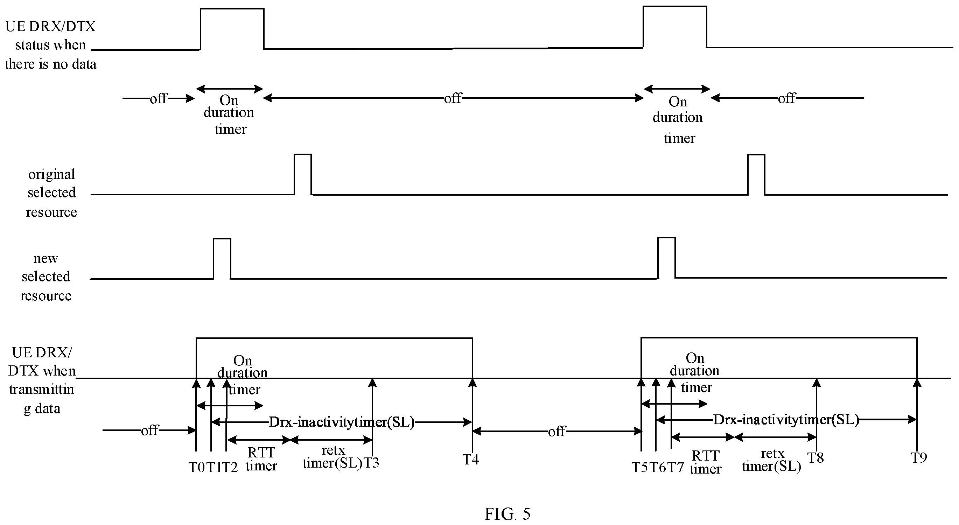

The specific implementation process of a communication method for sidelink interface provided by the embodiment of the present disclosure will be described in detail below with reference to FIG. 5 to FIG. 7.

The method in the present disclosure is applied in a unicast sidelink scenario, that is, the transmitting terminal UE1 and the receiving terminal UE2 communicate with each other through an SL link. In the DRX/DTX mechanism, UE1 and UE2 may cyclically enter the active time of the SL DRX/DTX corresponding to the sidelink interface destination Layer-2 ID, and during the active time of the SL DRX/DTX corresponding to the sidelink interface destination Layer-2 ID, UE1 transmits data, and UE2 receives corresponding data.

In the scenario where UE1 activates the DRX/DTX configuration of the link, and one process of UE1 has selected resources and has data to be transmitted, it is assumed: the original resource reservation interval is 200 ms, the cycle of DRX/DTX is 200 ms, drx-onDurationTimerSL is 20 ms, drx-InactivityTimerSL is 100 ms, drx-RetransmissionTimerSL is 40 ms, and drx-HARQ-RTT-TimerSL is 2 ms.


Embodiment 1

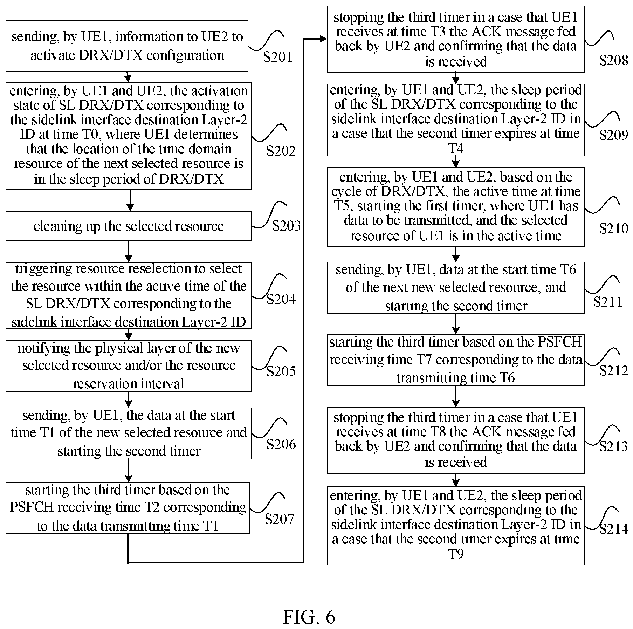

With reference to the timing diagram shown in FIG. 5, a communication method for a sidelink interface provided by the present disclosure, as shown in FIG. 6, includes the following steps S201 to S209.

S201. sending, by UE1, information to UE2 to activate a DRX/DTX configuration.

The SL DRX/DTX corresponding to the sidelink interface destination Layer-2 ID is cyclically activated, and for the SL DRX/DTX state corresponding to the sidelink interface destination Layer-2 ID when there is no data transmission, reference may be made to the uppermost schematic view in FIG. 5.

S202, entering, by UE1 and UE2, the activation state of SL DRX/DTX corresponding to the sidelink interface destination Layer-2 ID (that is, the active time of the SL DRX/DTX corresponding to the sidelink interface destination Layer-2 ID above) at time T0, where UE1 has data to be transmitted in process 1, and according to the fact that only the first timer drx-onDurationTimerSL is currently running, UE1 determines that the location of the time domain resource of the next selected resource is in the sleep period of DRX/DTX.

S203. cleaning up the selected resource.

Specifically, in this embodiment, since the original selected resources corresponding to process 1 are in the sleep period of DRX/DTX, these selected resources cannot be used for data transmission. Thus, the UE needs to clean up these selected resources, so as to store reselected selected resources and use the reselected selected resources when performing data transmission.

S204. triggering a resource reselection to select the resource within the active time of the SL DRX/DTX corresponding to the sidelink interface destination Layer-2 ID.

Specifically, in this embodiment, during the resource reselection process, time domain resources and frequency domain resources used for data transmission need to be reselected, and the reselected time domain resources need to be located within the active time of the SL DRX/DTX corresponding to the sidelink interface destination Layer-2 ID.

The resource reselection counter SL_RESOURCE_RESELECTION_COUNTER may be reset according to a resource reservation interval.

Each time the UE selects a resource, the counter is reset and randomly takes a value between [5, 15] (the resource reservation cycle is greater than or equal to 100 ms), or takes a value between

$$\left[ 5 \times \left\lceil \frac{100}{\max(20, \ P_{\mathrm{rsvp\_TX}})} \right\rceil , \ 15 \times \left\lceil \frac{100}{\max(20, \ P_{\mathrm{rsvp\_TX}})} \right\rceil \right]$$

(the resource reservation cycle is less than 100 ms). The UE independently maintains one counter for each existing resource reservation process, and the counter needs to be decremented by 1 each time the UE uses the resources of the process to perform a data transmission. When the counter returns to 0 or equal to 1, if the process still has data to be transmitted, the UE needs to select a random number between [0, 1], and when the random number is less than or equal to the threshold SL-ProbResourceKeep configured by the upper layer, the UE triggers the resource reselection.

S205. Notifying the physical layer of the new selected resource and the resource reservation interval.

It should be noted that, in this embodiment, the resource reservation interval may also be reset, for example, the resource reservation interval may be set to 200 ms according to data stored in a buffer and the service quality of service (QoS). That is to say, data transmission is performed at an interval of 200 ms by using the same resource. Then, the resource reservation interval notified to the physical layer is the newly set resource reservation interval. If the resource reservation interval is not reset, the resource reservation interval notified to the physical layer is the original resource reservation interval.

S206. sending, by UE1, at the start time T1 of the new selected resource, the data and starting the second timer drx-InactivityTimerSL.

S207. starting the third timer drx-RetransmissionTimerSL based on the PSFCH receiving time T2 corresponding to the data transmitting time T1. That is: starting the third timer after the data is transmitted.

Optionally, in an embodiment, the fourth timer drx-HARQ-RTT-TimerSL may be started first after the data is transmitted, and the third timer drx-RetransmissionTimerSL is started after the fourth timer expires.

S208. stopping the third timer drx-RetransmissionTimerSL in a case that UE1 receives at time T3 the ACK message fed back by UE2 and confirming that the data is received.

S209. entering, by UE1 and UE2, the sleep period of the SL DRX/DTX corresponding to the sidelink interface destination Layer-2 ID in a case that the second timer drx-InactivityTimerSL expires at time T4.

So far, the data transmission in one cycle of DRX/DTX is completed. Since the reset resource preset interval is consistent with the cycle of DRX/DTX, the new selected resource may be directly used for data transmission in each subsequent cycle of DRX/DTX, specifically, the process of performing data transmission in the next cycle of DRX/DTX may include following steps S210 to S214.

S210. entering, by UE1 and UE2, based on the cycle of DRX/DTX, the active time at time T5, starting the first timer drx-onDurationTimerSL, where UE1 has data to be transmitted, and the selected resource of UE1 (the reselected resource above) is in the active time.

S211. sending, by UE1, data at the start time T6 of the next new selected resource, and starting the second timer drx-InactivityTimerSL.

S212. starting the third timer drx-RetransmissionTimerSL based on the PSFCH receiving time T7 corresponding to the data transmitting time T6.

Optionally, in an embodiment, the fourth timer drx-HARQ-RTT-TimerSL may be started first after the data is transmitted, and the third timer drx-RetransmissionTimerSL is started after the fourth timer expires.

S213. stopping the third timer drx-RetransmissionTimerSL in a case that UE1 receives at time T8 the ACK message fed back by UE2 and confirming that the data is received.

S214. entering, by UE1 and UE2, the sleep period of the SL DRX/DTX corresponding to the sidelink interface destination Layer-2 ID in a case that the second timer drx-InactivityTimerSL expires at time T9.

Embodiment 2

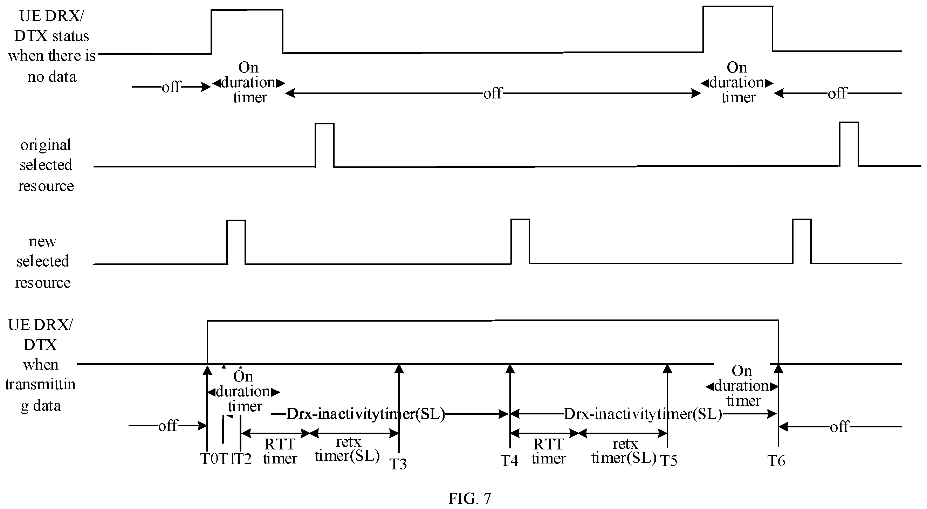

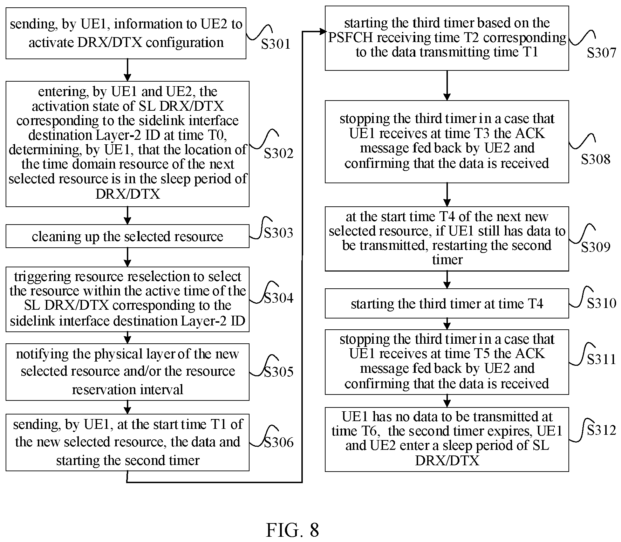

With reference to the timing diagram shown in FIG. 7, a communication method for a sidelink interface provided by the present disclosure, as shown in FIG. 8, includes the following steps S301 to S308.

S301. sending, by UE1, information to UE2 to activate DRX/DTX configuration.

The SL DRX/DTX corresponding to the sidelink interface destination Layer-2 ID is cyclically activated, and for the SL DRX/DTX state corresponding to the sidelink interface destination Layer-2 ID when there is no data transmission, reference may be made to the uppermost schematic view in FIG. 7.

S302. entering, by UE1 and UE2, the activation state of SL DRX/DTX corresponding to the sidelink interface destination Layer-2 ID (that is, the active time of the SL DRX/DTX corresponding to the sidelink interface destination Layer-2 ID above) at time T0, where UE1 has data to be transmitted in process 1, and according to the fact that only the first timer drx-onDurationTimerSL is currently running, UE1 determines that the location of the time domain resource of the selected resource is in the sleep period of DRX/DTX.

S303. cleaning up the selected resource.

S304. triggering resource reselection to select the resource within the active time of the SL DRX/DTX corresponding to the sidelink interface destination Layer-2 ID.

Specifically, in this embodiment, during the resource reselection process, time domain resource and frequency domain resource used for data transmission need to be reselected, and the reselected time domain resource needs to be located within the active time of the SL DRX/DTX corresponding to the sidelink interface destination Layer-2 ID.

The resource reselection counter SL_RESOURCE_RESELECTION_COUNTER may be reset according to the resource reservation interval.

S305. notifying the physical layer of the new selected resource and the resource reservation interval.

It should be noted that, in this embodiment, the resource reservation interval may also be reset, for example, the resource reservation interval may be set to 100 ms according to the data stored in the buffer and the service QoS. That is to say, the same resource is used for data transmission at intervals of 100ms. Then, the resource reservation interval notified to the physical layer is the newly set resource reservation interval. If the resource reservation interval is not reset, the resource reservation interval notified to the physical layer is the original resource reservation interval.

S306. sending, by UE1, at the start time T1 of the new selected resource, the data and starting the second timer drx-InactivityTimerSL.

S307. starting the third timer drx-RetransmissionTimerSL based on the PSFCH receiving time T2 corresponding to the data transmitting time T1. That is: starting the third timer after the data is transmitted.

Optionally, in an embodiment, the fourth timer drx-HARQ-RTT-TimerSL may be started first after the data is transmitted, and the third timer drx-RetransmissionTimerSL is started after the fourth timer expires.

S308. stopping the third timer drx-RetransmissionTimerSL in a case that UE1 receives at time T3 the ACK message fed back by UE2 and confirming that the data is received.

So far, a data transmission has been completed in one cycle of DRX/DTX, if UE1 still has data to be transmitted, the above-mentioned data transmission process will be performed repeatedly on the subsequent new selected resource until there is no data for transmission, and the second timer started at the last data transmission expires, and enters the sleep period of the SL DRX/DTX corresponding to the sidelink interface destination Layer-2 ID. Specifically, the process of performing the subsequent data transmission on a new selected resource may include following steps S309 to S312.

S309. at the start time T4 of the next new selected resource, if UE1 still has data to be transmitted, restarting the second timer drx-InactivityTimerSL.

S310. starting the third timer drx-RetransmissionTimerSL at time T4.

Optionally, in an embodiment, the fourth timer drx-HARQ-RTT-TimerSL may be started first after the data is transmitted, and the third timer drx-RetransmissionTimerSL is started after the fourth timer expires.

S311. stopping the third timer drx-RetransmissionTimerSL in a case that UE1 receives at time T5 the ACK message fed back by UE2 and confirming that the data is received.

S312. UE1 has no data to be transmitted at time T6, although there is a selected resource, because the second timer drx-InactivityTimerSL expires, UE1 and UE2 enter a sleep period.

Embodiment 3

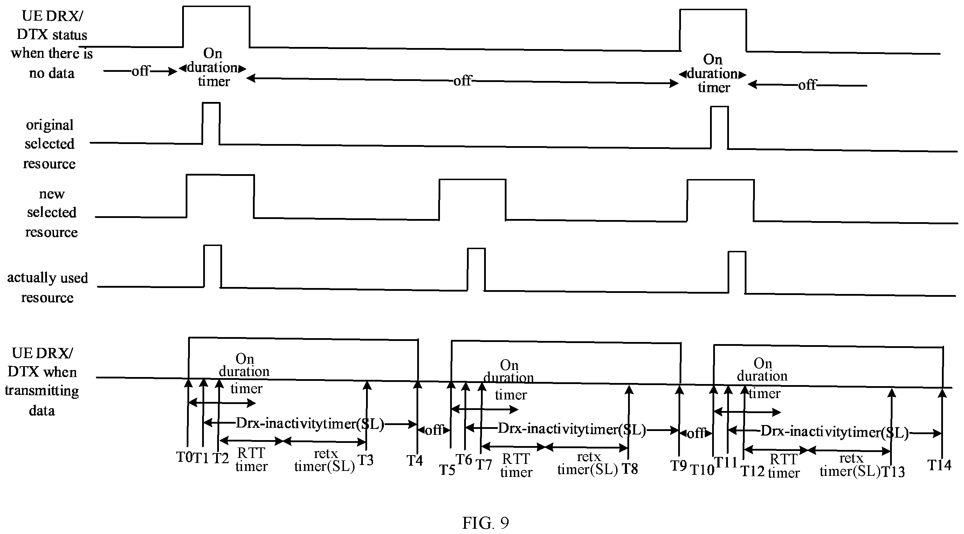

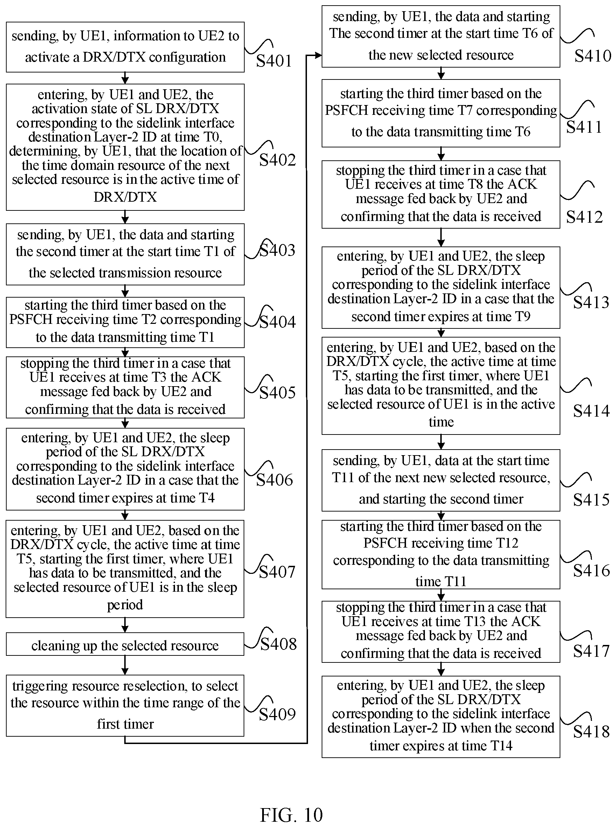

In this embodiment, the original DRX/DTX cycle is 200 ms, the original resource reservation interval is 200 ms, and the new DRX/DTX cycle is 100 ms, that is, in a case that the new cycle of DRX/DTX is inconsistent with the original resource reservation interval, with reference to the timing diagram shown in FIG. 9, a communication method for a sidelink interface provided by the present disclosure, as shown in FIG. 10 , includes the following steps S401 to S413.

S401. sending, by UE1, information to UE2 to activate a DRX/DTX configuration.

The SL DRX/DTX corresponding to the sidelink interface destination Layer-2 ID is cyclically activated, and for the SL DRX/DTX state corresponding to the sidelink interface destination Layer-2 ID when there is no data transmission, reference may be made to the uppermost schematic view in FIG. 9.

S402. entering, by UE1 and UE2, the activation state of SL DRX/DTX corresponding to the sidelink interface destination Layer-2 ID at time T0, where the transmitting UE1 has data to be transmitted in process 1, and according to the fact that only the first timer drx-onDurationTimerSL is currently running, UE1 determines that the location of the time domain resource of the next selected resource is in the active time of DRX/DTX, and then uses the selected resource to transmit the data.

S403. sending, by UE1, the data and starting the second timer drx-InactivityTimerSL at the start time T1 of the selected transmission resource.

S404. starting the third timer drx-RetransmissionTimerSL based on the PSFCH receiving time T2 corresponding to the data transmitting time T1. That is: starting the third timer after the data is transmitted.

Optionally, in an embodiment, the fourth timer drx-HARQ-RTT-TimerSL may be started first after the data is transmitted, and the third timer drx-RetransmissionTimerSL is started after the fourth timer expires.

S405. stopping the third timer drx-RetransmissionTimerSL in a case that UE1 receives at time T3 the ACK message fed back by UE2 and confirming that the data is received.

S406. entering, by UE1 and UE2, the sleep period of the SL DRX/DTX corresponding to the sidelink interface destination Layer-2 ID in a case that the second timer drx-InactivityTimerSL expires at time T4.

So far, the data transmission in one cycle of DRX/DTX is completed. Since the original resource preset interval is inconsistent with the new cycle of DRX/DTX, therefore, the process of performing data transmission in the next cycle of DRX/DTX may include following steps S407 to S413:

S407. entering, by UE1 and UE2, based on the DRX/DTX cycle, the active time at time T5, starting the first timer drx-onDurationTimerSL, where UE1 has data to be transmitted, and the selected resource of UE1 is in the sleep period.

S408. cleaning up, by UE1, the selected resource.

S409. reselecting, by UE1, the resource within the time range of drx-onDurationTimerSL, and resetting the resource reservation interval to 100 ms, and notifying the physical layer of the new selected resource and the new resource reservation interval.

S410. sending the data and starting drx-InactivityTimerSL at the start time T6 of the new selected resource.

Specifically, in this embodiment, the location of the time domain resource of the reselected resource is within the time range of drx-onDurationTimerSL.

S411. starting the third timer drx-RetransmissionTimerSL based on the PSFCH receiving time T7 corresponding to the data transmitting time T6.

Optionally, in an embodiment, the fourth timer drx-HARQ-RTT-TimerSL may be started first after the data is transmitted, and the third timer drx-RetransmissionTimerSL is started after the fourth timer expires.

S412. stopping the third timer drx-RetransmissionTimerSL in a case that UE1 receives at time T8 the ACK message fed back by UE2 and confirming that the data is received.

S413. entering, by UE1 and UE2, the sleep period of the SL DRX/DTX corresponding to the sidelink interface destination Layer-2 ID, in a case that the second timer drx-InactivityTimerSL expires at time T9.

So far, the data transmission in the next cycle of DRX/DTX is completed. Since the reset resource preset interval is consistent with the new cycle of DRX/DTX, therefore, the new selected resource may be directly used for data transmission in each subsequent cycle of DRX/DTX, specifically, the process of performing data transmission in the next cycle of DRX/DTX may include following steps S414 to S418.

S414. entering, by UE1 and UE2, based on the DRX/DTX cycle, the active time at time T10, starting drx-onDurationTimerSL, where UE1 has data to be transmitted, and the selected resource of UE1 is in the active time.

S415. sending, by UE1, data at the start time T11 of the next new selected resource, and starting drx-InactivityTimerSL.

S416. starting the third timer drx-RetransmissionTimerSL based on the PSFCH receiving time T12 corresponding to the data transmitting time T11.

Specifically, in this embodiment, the fourth timer drx-HARQ-RTT-TimerSL may be started at time T12, and the third timer drx-RetransmissionTimerSL is started after the fourth timer expires.

S417. stopping the third timer drx-RetransmissionTimerSL in a case that UE1 receives at time T13 the ACK message fed back by UE2 and confirming that the data is received.

S418. entering, by UE1 and UE2, the sleep period of the SL DRX/DTX corresponding to the sidelink interface destination Layer-2 ID when the second timer drx-InactivityTimerSL expires at time T14.

It should be noted that, in the foregoing embodiments, UE2 serves as a data receiving terminal, and after entering the active time based on the cycle of DRX/DTX, when UE1 has data to be transmitted, UE2 can receive corresponding data.

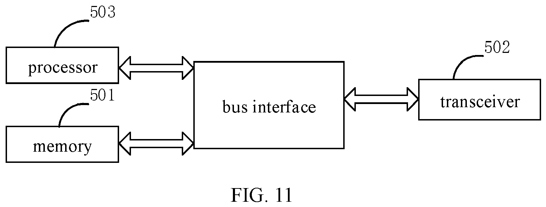

The technical solution of a communication method for a sidelink interface provided by the embodiment of the present disclosure has been described in detail above with reference to the FIG. 4 to FIG. 10. A terminal device implementing a communication method for a sidelink interface provided in an embodiment of the present disclosure will be described in detail below with reference to FIG. 11.

An embodiment of the present disclosure provides a terminal device, as shown in FIG. 11, the terminal device may include: a memory 501, a transceiver 502 and a processor 503, where the memory 501 is configured to store a computer program; the transceiver 502 is configured to transmit and receive data under the control of the processor 503; the processor 503 is configured to read the computer program in the memory 501 and perform the following operations: determining that a selected resource is outside an active time of a sidelink (SL) discontinuous reception/discontinuous transmission (DRX/DTX) corresponding to a sidelink interface destination Layer-2 ID; determining to perform a resource selection or reselection.

In some embodiments, the processor 503 is specifically configured to perform the resource reselection by executing a first operation as follows: optionally, cleaning up the selected resource; selecting a resource within the active time of the SL DRX/DTX corresponding to the sidelink interface destination Layer-2 ID as a new selected resource; notifying a physical layer of the active time of the SL DRX/DTX corresponding to the sidelink interface destination Layer-2 ID, and/or the new selected resource and/or a resource reservation interval.

The selecting the resource within the active time of the SL DRX/DTX corresponding to the sidelink interface destination Layer-2 ID as the new selected resource includes: selecting, in a case that a resource pool where the selected resource is located includes the resource within the active time of the SL DRX/DTX corresponding to the sidelink interface destination Layer-2 ID, the resource within the active time of the SL DRX/DTX corresponding to the sidelink interface destination Layer-2 ID from the resource pool as the new selected resource; selecting, in a case that the resource pool where the selected resource is located does not include the resource within the active time of the SL DRX/DTX corresponding to the sidelink interface destination Layer-2 ID, a new resource pool, and selecting the resource within the active time of the SL DRX/DTX corresponding to the sidelink interface destination Layer-2 ID from the new resource pool as the new selected resource, where the new resource pool includes the resource within the active time of the SL DRX/DTX corresponding to the sidelink interface destination Layer-2 ID.

In some embodiments, the processor 503 is specifically configured to determine, in a case that a process corresponding to the selected resource has to-be-transmitted data corresponding to the sidelink interface destination Layer-2 ID, to perform the resource reselection.

In some embodiments, in a case that no corresponding timer is in a running state in one cycle of the SL DRX/DTX corresponding to the sidelink interface destination Layer-2 ID, the transmitting terminal enters a sleep period of the SL DRX/DTX corresponding to the sidelink interface destination Layer-2 ID, where the corresponding timer is at least one of a first timer, a second timer or a third timer.

In some embodiments, the processor 503 is further configured to set the resource reservation interval.

Specifically, in the embodiment, the resource reservation interval notified to the physical layer is a newly set resource reservation interval.

In some embodiments, the processor 503 is further configured to perform the data transmission in one cycle of the SL DRX/DTX corresponding to the sidelink interface destination Layer-2 ID by executing a second operation as follows: entering, by the transmitting terminal, the active time of the SL DRX/DTX corresponding to the sidelink interface destination Layer-2 ID after starting the first timer; performing data transmission on the new selected resource, and starting the second timer; starting the third timer after the data transmission; entering, by the transmitting terminal, the sleep period of the SL DRX/DTX corresponding to the sidelink interface destination Layer-2 ID in a case that the first timer, the second timer and the third timer all expire.

Specifically, in this embodiment, the starting the third timer includes: starting a fourth timer; and starting the third timer after the fourth timer expires.

In some embodiments, the processor 503 is further configured to perform, in a next cycle of the SL DRX/DTX corresponding to the sidelink interface destination Layer-2 ID and on a next new selected resource determined based on the resource reservation interval, the data transmission through the second operation.

In some embodiments, in a case that there is continuous data transmission, the processor 503 is further configured to perform a third operation repeatedly until there is no data for transmission, and when the first timer, the second timer and the third timer all expire, enter the sleep period of the SL DRX/DTX corresponding to the sidelink interface destination Layer-2 ID, wherein the third operation includes: transmitting data on the next new selected resource determined based on the resource reservation interval, and restarting the second timer; starting the third timer after the data transmission.

In some embodiments, the processor 503 is further configured to, in case that it is determined that the selected resource is within the active time of the SL DRX/DTX corresponding to the sidelink interface destination Layer-2 ID, retain the selected resource, and perform the data transmission on the selected resource.

In some embodiments, in a case that the resource reservation interval is inconsistent with the cycle of the SL DRX/DTX corresponding to the sidelink interface destination Layer-2 ID, the processor 503 is further configured to start the first timer in the next cycle of the SL DRX/DTX corresponding to the sidelink interface destination Layer-2 ID, and enter the active time of the SL DRX/DTX corresponding to the sidelink interface destination Layer-2 ID; clean up, in a case that the next selected resource is outside the active time of the SL DRX/DTX corresponding to the sidelink interface destination Layer-2 ID, the selected resource; perform the resource reselection within a time range of the first timer, and perform the data transmission on the new selected resource.

In some embodiments, the processor 503 is further configured to set the resource reservation interval, and notify the physical layer of the newly set resource reservation interval.

In the above-mentioned embodiments, the active time of the SL DRX/DTX corresponding to the sidelink interface destination Layer-2 ID is included in a time range of any one running timer of the following timers: a first timer, a second timer and a third timer. The first timer is a discontinuous reception on duration timer of SL link (drx-on duration Timer), the third timer is a discontinuous reception retransmission timer of the SL link (drx-Retransmission Timer), the second timer is a discontinuous reception inactivity timer of the SL link (drx-Inactivity Timer).

The terminal device in this embodiment can execute the method shown in the aforementioned FIG. 4 to FIG. 7 of the present disclosure, and its implementation principles are similar. For content not described in detail in this embodiment, reference may be made to the method provided in the above-mentioned embodiments. The terminal device provided in the embodiments of the present disclosure can achieve the same beneficial effect as the method provided in the above-mentioned embodiments, and details thereof are not repeated here.

It should be understood that in the above-mentioned embodiments, the bus architecture in FIG. 11 may include any number of interconnected buses and bridges, and connects various circuits including one or more processors represented by the processor 503 and memory represented by the memory 501. The bus architecture may also connect various other circuits such as peripherals, voltage regulators and power management circuits, which is well known in the art. Therefore, a detailed description thereof is omitted herein. A bus interface provides an interface. The transceiver 502 may be multiple elements, including a transmitter and a receiver, to allow for communication with various other apparatuses on transmission media. These transmission media include wireless channels, wired channels, optical cables, and the like.

The processor 503 is responsible for supervising the bus architecture and normal operation and the memory 501 may store the data being used by the processor 503 during operation.

Optionally, the processor 503 may be a central processing unit (CPU), application specific integrated circuit (ASIC), field-programmable gate array (FPGA) or complex programmable logic device (CPLD). The processor may also adopt a multi-core architecture.

The processor is configured to execute any method provided in the embodiments of the present disclosure according to the executable instructions obtained by calling the computer program stored in the memory. The processor and the memory may also be physically arranged separately.

Based on the same inventive concept, an embodiment of the present disclosure further provides a terminal device, which may include: a processing module.

The processing module is configured to determine that a selected resource is outside an active time of a sidelink (SL) discontinuous reception/discontinuous transmission (DRX/DTX) corresponding to a sidelink interface destination Layer-2 ID, and determine to perform a resource selection or reselection.

In some embodiments, the processing module is specifically configured to perform the resource reselection by executing a first operation as follows: optionally, cleaning up the selected resource; selecting a resource within the active time of the SL DRX/DTX corresponding to the sidelink interface destination Layer-2 ID as a new selected resource; notifying a physical layer of the active time of the SL DRX/DTX corresponding to the sidelink interface destination Layer-2 ID, and/or the new selected resource and/or a resource reservation interval.

The selecting the resource within the active time of the SL DRX/DTX corresponding to the sidelink interface destination Layer-2 ID as the new selected resource includes: selecting, in a case that a resource pool where the selected resource is located includes the resource within the active time of the SL DRX/DTX corresponding to the sidelink interface destination Layer-2 ID, the resource within the active time of the SL DRX/DTX corresponding to the sidelink interface destination Layer-2 ID from the resource pool as the new selected resource; selecting, in a case that the resource pool where the selected resource is located does not include the resource within the active time of the SL DRX/DTX corresponding to the sidelink interface destination Layer-2 ID, a new resource pool, and selecting the resource within the active time of the SL DRX/DTX corresponding to the sidelink interface destination Layer-2 ID from the new resource pool as the new selected resource, where the new resource pool includes the resource within the active time of the SL DRX/DTX corresponding to the sidelink interface destination Layer-2 ID.

In some embodiments, the processing module is specifically configured to determine, in a case that a process corresponding to the selected resource has to-be-transmitted data corresponding to the sidelink interface destination Layer-2 ID, to perform the resource reselection.

In some embodiments, in a case that no corresponding timer is in a running state in one cycle of the SL DRX/DTX corresponding to the sidelink interface destination Layer-2 ID, the transmitting terminal enters a sleep period of the SL DRX/DTX corresponding to the sidelink interface destination Layer-2 ID, where the corresponding timer is at least one of a first timer, a second timer or a third timer.

In some embodiments, the processing module is further configured to set the resource reservation interval.

Specifically, in this embodiment, the resource reservation interval notified to the physical layer is a newly set resource reservation interval.

In some embodiments, the processing module is further configured to perform the data transmission in one cycle of the SL DRX/DTX corresponding to the sidelink interface destination Layer-2 ID by executing a second operation as follows: entering, by the transmitting terminal, the active time of the SL DRX/DTX corresponding to the sidelink interface destination Layer-2 ID after starting the first timer; performing data transmission on the new selected resource, and starting the second timer; starting the third timer after the data transmission; entering, by the transmitting terminal, in a case that the first timer, the second timer and the third timer all expire, the sleep period of the SL DRX/DTX corresponding to the sidelink interface destination Layer-2 ID.

Specifically, in this embodiment, the starting the third timer includes: starting a fourth timer; and starting the third timer after the fourth timer expires.

In some embodiments, the processing module is further configured to: start the first timer in the next cycle of the SL DRX/DTX corresponding to the sidelink interface destination Layer-2 ID, enter, by the transmitting terminal, the active time of the SL DRX/DTX corresponding to the sidelink interface destination Layer-2 ID, and perform the data transmission through the second operation on a next new selected resource determined based on the resource reservation interval.

In some embodiments, in a case that there is continuous data transmission, the processing module is further configured to perform a third operation repeatedly until there is no data for transmission, and when the first timer, the second timer and the third timer all expire, enter the sleep period of the SL DRX/DTX corresponding to the sidelink interface destination Layer-2 ID, wherein the third operation includes: transmitting data on the next new selected resource determined based on the resource reservation interval, and restarting the second timer; and starting the third timer after the data transmission.

In some embodiments, the processing module is further configured to retain the selected resource in a case that the selected resource is within the active time of the SL DRX/DTX corresponding to the sidelink interface destination Layer-2 ID, and perform the data transmission on the selected resource.

In some embodiments, in a case that the resource reservation interval is inconsistent with the cycle of the SL DRX/DTX corresponding to the sidelink interface destination Layer-2 ID, the processing module is further configured to: start the first timer in the next cycle of the SL DRX/DTX corresponding to the sidelink interface destination Layer-2 ID, and enter, by the transmitting terminal, the active time of the SL DRX/DTX corresponding to the sidelink interface destination Layer-2 ID; clean up, in a case that the next selected resource is outside the active time of the SL DRX/DTX corresponding to the sidelink interface destination Layer-2 ID, the selected resource; perform the resource reselection within a time range of the first timer, and perform the data transmission on the new selected resource.

In some embodiments, the processing module is further configured to set the resource reservation interval, and notify the physical layer of the newly set resource reservation interval.

The terminal device in this embodiment can execute the method shown in the preceding FIG. 4 to FIG. 10 of the present disclosure, and its implementation principle is similar. For content not described in detail in this embodiment, reference may be made to the method provided in the above-mentioned embodiments. The terminal device provided in the embodiments of the present disclosure can achieve the same beneficial effect as the method provided in the above-mentioned embodiments, and details thereof are not repeated here.

An embodiment of the present disclosure provides a computer-readable storage medium storing thereon a computer program, when the computer program is run on a computer, the computer can execute the corresponding content in the foregoing method embodiments. Compared with the related art, when the selected resource is outside the active time of the SL DRX/DTX corresponding to the sidelink interface destination Layer-2 ID, resource reselection is performed, so as to ensure that the sidelink resource is always within the active time of the sidelink interface DRX/DTX configuration, thereby avoiding waste of resources.

It should be understood that although the various steps in the flowchart of the drawings are displayed in sequence according to the indication of arrows, these steps are not necessarily executed in sequence in the order indicated by the arrows. Unless otherwise specified herein, there is no strict order restriction on the execution of these steps, and these steps may be executed in other orders. Moreover, at least some of the steps in the flowcharts of the drawings may include multiple sub-steps or multiple stages, and these sub-steps or stages may not necessarily be executed completely at the same time, but may be executed at different times, the execution sequence thereof is not necessarily performed sequentially, but may be performed in turn or alternately with at least a part of other steps or sub-steps or stages of other steps.

It should be noted that the division of units in the embodiment of the present disclosure is illustrative, and is only a logical function division, and there may be another division manner in actual implementation. In addition, functional units in various embodiments of the present disclosure may be integrated into one processing unit, or each unit may exist separately physically, or two or more units may be integrated into one unit. The above-mentioned integrated units can be implemented in the form of hardware or in the form of software functional units.

An integrated unit may be stored in a processor-readable storage medium if the integrated unit is realized in the form of a software function unit and sold or used as an independent product. Based on this understanding, essential parts, or parts contributing to the related art, of the technical solution of the present disclosure, or all or a part of the technical solution may be implemented in form of a software product, and the computer software product is stored in a storage medium including several instructions, such that a computer device (which may be a personal computer, a server, or a network device, etc.) or a processor (processor) executes all or part of the steps of the method in the various embodiments of the present disclosure. The aforementioned storage media include: USB disk, a removable hard disk, a read-only memory (ROM), a random access memory (RAM), a magnetic disk, an optical disc, and other medium which can store program codes.

Those skilled in the art should understand that the embodiments of the present disclosure may be provided as methods, systems, or computer program products. Therefore, the present disclosure may take the form of an entirely hardware embodiment, an entirely software embodiment, or an embodiment combining software and hardware aspects. Furthermore, the present disclosure may take the form of a computer program product embodied on one or more computer-usable storage media (including but not limited to disk storage and optical storage, etc.) including computer-usable program codes.

The present disclosure is described with reference to flowcharts and/or block diagrams of methods, device (systems), and computer program products according to embodiments of the present disclosure. It should be understood that each procedure and/or block in the flowchart and/or block diagrams, and combinations of procedures and/or blocks in the flowchart and/or block diagrams can be implemented by computer-executable instructions. These computer-executable instructions can be provided to a general-purpose computer, special-purpose computer, embedded processor, or processor of other programmable data processing device to produce a machine, such that instructions executed by the processor of the computer or other programmable data processing device produce an apparatus for realizing the functions specified in one or more procedures of a flowchart and/or one or more blocks of a block diagram.

These processor-executable instructions may also be stored in a processor-readable memory capable of directing a computer or other programmable data processing device to operate in a specific manner, such that the instructions stored in the processor-readable memory produce a manufacturing product including the instruction apparatus, the instruction apparatus realizes the functions specified in one or more procedures of the flowchart and/or one or more blocks of the block diagram.

These processor-executable instructions can also be loaded onto a computer or other programmable data processing device to cause a series of operational steps executed on a computer or other programmable device to produce a computer-implemented processing, so that the instructions executed on the computer or other programmable device provide steps for achieving the functions specified in one or more procedures of the flowchart and/or one or more blocks of the block diagram.

The above descriptions are only part of the embodiments of the present disclosure, and it should be pointed out that for those ordinarily skilled in the art, without departing from the principle of the present disclosure, some improvements and modifications can also be made, and these improvements and modifications are also should be regarded as falling within the scope of the present disclosure.

**Claims**

1.   A communication method for a sidelink interface, performed by a transmitting terminal, comprising:

   determining that a previously selected resource is outside an active time of a sidelink (SL) discontinuous reception/discontinuous transmission (DRX/DTX) corresponding to a sidelink interface destination Layer-2 ID;
   determining to perform a resource selection or reselection.

2.   The communication method according to claim 1, wherein the resource reselection is performed by executing a first operation as follows:

   selecting a resource within the active time of the SL DRX/DTX corresponding to the sidelink interface destination Layer-2 ID as a newly selected resource;
   notifying a physical layer of the active time of the SL DRX/DTX corresponding to the sidelink interface destination Layer-2 ID, and/or the newly selected resource and/or a resource reservation interval.

3.   The communication method according to claim 1, wherein prior to the selecting the resource within the active time of the SL DRX/DTX corresponding to the sidelink interface destination Layer-2 ID as the newly selected resource, the method further comprises:
   cleaning up the previously selected resource.

4.   The communication method according to claim 2, wherein the selecting the resource within the active time of the SL DRX/DTX corresponding to the sidelink interface destination Layer-2 ID as the newly selected resource comprises:

selecting, in a case that a resource pool where the previously selected resource is located comprises the resource within the active time of the SL DRX/DTX corresponding to the sidelink interface destination Layer-2 ID, the resource within the active time of the SL DRX/DTX corresponding to the sidelink interface destination Layer-2 ID from the resource pool as the newly selected resource;

selecting, in a case that the resource pool where the previously selected resource is located does not comprise the resource within the active time of the SL DRX/DTX corresponding to the sidelink interface destination Layer-2 ID, a new resource pool, and selecting the resource within the active time of the SL DRX/DTX corresponding to the sidelink interface destination Layer-2 ID from the new resource pool as the newly selected resource, wherein the new resource pool comprises the resource within the active time of the SL DRX/DTX corresponding to the sidelink interface destination Layer-2 ID.

5. The communication method according to claim 2, wherein the first operation further comprises:
setting the resource reservation interval.

6. The communication method according to claim 5, wherein the resource reservation interval notified to the physical layer is a newly set resource reservation interval.

7. The communication method according to any one of claims 2 to 6, wherein the determining to perform the resource reselection comprises:
determining, in a case that a process corresponding to the previously selected resource has to-be-transmitted data corresponding to the sidelink interface destination Layer-2 ID, to perform the resource reselection.

8. The communication method according to claim 7, further comprising:
determining, in a case that no corresponding timer is in a running state in one cycle of the SL DRX/DTX corresponding to the sidelink interface destination Layer-2 ID, that the transmitting terminal enters a sleep period of the SL DRX/DTX corresponding to the sidelink interface destination Layer-2 ID, wherein the corresponding timer is at least one of a first timer, a second timer or a third timer.

9. The communication method according to claim 8, wherein data transmission is performed in one cycle of the SL DRX/DTX corresponding to the sidelink interface destination Layer-2 ID by executing a second operation as follows:

entering, by the transmitting terminal, the active time of the SL DRX/DTX corresponding to the sidelink interface destination Layer-2 ID after starting the first timer;
performing the data transmission on the newly selected resource, and starting the second timer;
starting the third timer after the data transmission;
entering, by the transmitting terminal, the sleep period of the SL DRX/DTX corresponding to the sidelink interface destination Layer-2 ID in a case that the first timer, the second timer and the third timer all expire.

10. The communication method according to claim 9, wherein the starting the third timer comprises:

starting a fourth timer;
starting the third timer after the fourth timer expires.

11. The communication method according to claim 9, further comprising:
performing, in a next cycle of the SL DRX/DTX corresponding to the sidelink interface destination Layer-2 ID and on a next newly selected resource determined based on the resource reservation interval, the data transmission through the second operation.

12. The communication method according to claim 9, wherein in a case that there is continuous data transmission, the method further comprises:
performing a third operation repeatedly until there is no data for transmission and when the first timer, the second timer and the third timer all expire, entering, by the transmitting terminal, the sleep period of the SL DRX/DTX corresponding to the sidelink interface destination Layer-2 ID, wherein the third operation comprises:

performing the data transmission on a next newly selected resource determined based on the resource reservation interval, and restarting the second timer;

starting the third timer after the data transmission.

13. The communication method according to claim 1, further comprising:
determining that the previously selected resource is within the active time of the SL DRX/DTX corresponding to the sidelink interface destination Layer-2 ID, retaining the previously selected resource, and performing data transmission on the previously selected resource.

14. The communication method according to claim 13, wherein in a case that the resource reservation interval is inconsistent with the cycle of the SL DRX/DTX corresponding to the sidelink interface destination Layer-2 ID, the method further comprises:

starting a first timer in the next cycle of the SL DRX/DTX corresponding to the sidelink interface destination Layer-2 ID, and entering, by the transmitting terminal, the active time of the SL DRX/DTX corresponding to the sidelink interface destination Layer-2 ID;
cleaning up the previously selected resource in a case that a next selected resource is outside the active time of the SL DRX/DTX corresponding to the sidelink interface destination Layer-2 ID;
performing the resource reselection within a time range of the first timer, and performing the data transmission on a newly selected resource.

15. The communication method according to claim 13 or 14, further comprising:

setting a resource reservation interval;
notifying a physical layer of the newly set resource reservation interval.

16. The communication method according to claim 1, wherein the active time of the SL DRX/DTX corresponding to the sidelink interface destination Layer-2 ID is comprised in a time range of any one running timer of the following timers: a first timer, a second timer and a third timer.

17. The communication method according to any one of claims 8 to 12 or claim 16, wherein

the first timer is an SL discontinuous reception on duration timer (drx-on duration TimerSL),
the second timer is an SL discontinuous reception inactivity timer (drx-Inactivity TimerSL),
the third timer is an SL discontinuous reception retransmission timer (drx-Retransmission TimerSL).

18. A terminal device, comprising:

a memory, configured to store a computer program;
a transceiver, configured to transmit and receive data under the control of the processor;
a processor, configured to read the computer program in the memory and perform the following operations:

determining that a previously selected resource is outside an active time of an SL DRX/DTX corresponding to a sidelink interface destination Layer-2 ID;
determining to perform a resource selection or reselection.

19. The terminal device according to claim 18, wherein the processor is configured to perform the resource reselection by executing a first operation as follows:

selecting a resource within the active time of the SL DRX/DTX corresponding to the sidelink interface destination Layer-2 ID as a newly selected resource;
notifying a physical layer of the active time of the SL DRX/DTX corresponding to the sidelink interface destination Layer-2 ID, and/or the newly selected resource and/or a resource reservation interval.

20. The terminal device according to claim 19, wherein the processor is configured to further perform, prior to the selecting the resource within the active time of the SL DRX/DTX corresponding to the sidelink interface destination Layer-2 ID as the newly selected resource, the following operation:
cleaning up the previously selected resource.

21. The terminal device according to claim 19, wherein the processor is specifically configured to select, in a case that a resource pool where the previously selected resource is located comprises the resource within the active time of the SL DRX/DTX corresponding to the sidelink interface destination Layer-2 ID, the resource within the active time of the SL DRX/DTX corresponding to the sidelink interface destination Layer-2 ID from the resource pool as the newly selected resource;

select, in a case that the resource pool where the previously selected resource is located does not comprise the resource within the active time of the SL DRX/DTX corresponding to the sidelink interface destination Layer-2 ID, a new resource pool, and select the resource within the active time of the SL DRX/DTX corresponding to the sidelink interface destination Layer-2 ID from the new resource pool as the newly selected resource, wherein the new resource pool comprises the resource within the active time of the SL DRX/DTX corresponding to the sidelink interface destination Layer-2 ID.

22. The terminal device according to claim 19 or 21, wherein the processor is specifically configured to determine, in a case that a process corresponding to the previously selected resource has to-be-transmitted data corresponding to the sidelink interface destination Layer-2 ID, to perform the resource reselection.

23. The terminal device according to claim 22, wherein the processor is further configured to determine, in a case that no corresponding timer is in a running state in one cycle of the SL DRX/DTX corresponding to the sidelink interface destination Layer-2 ID, to enter a sleep period of the SL DRX/DTX corresponding to the sidelink interface destination Layer-2 ID, wherein the corresponding timer is at least one of a first timer, a second timer or a third timer.

24. The terminal device according to claim 23, wherein the processor is configured to perform data transmission in one cycle of the SL DRX/DTX corresponding to the sidelink interface destination Layer-2 ID by executing a second operation as follows:

entering the active time of the SL DRX/DTX corresponding to the sidelink interface destination Layer-2 ID after starting the first timer;
performing the data transmission on the newly selected resource, and starting the second timer;
starting the third timer after the data transmission;
entering, in a case that the first timer, the second timer and the third timer all expire, the sleep period of the SL DRX/DTX corresponding to the sidelink interface destination Layer-2 ID.

25. The terminal device according to claim 24, wherein the processor is further configured to perform, in a next cycle of the SL DRX/DTX corresponding to the sidelink interface destination Layer-2 ID and on a next newly selected resource determined based on the resource reservation interval, the data transmission through the second operation.

26. The terminal device according to claim 24, wherein in a case that there is continuous data transmission, the processor is further configured to:
perform a third operation repeatedly until there is no data for transmission and when the first timer, the second timer and the third timer all expire, enter the sleep period of the SL DRX/DTX corresponding to the sidelink interface destination Layer-2 ID, wherein the third operation comprises:

performing the data transmission on a next newly selected resource determined based on the resource reservation interval, and restarting the second timer;
starting the third timer after the data transmission.

27. The terminal device according to claim 18, wherein the processor is further configured to: determine that the previously selected resource is within the active time of the SL DRX/DTX corresponding to the sidelink interface destination Layer-2 ID, retain the previously selected resource, and perform the data transmission on the previously selected resource.

28. The terminal device according to claim 27, wherein in a case that the resource reservation interval is inconsistent with the cycle of the SL DRX/DTX corresponding to the sidelink interface destination Layer-2 ID, the processor is further configured to:

start a first timer in the next cycle of the SL DRX/DTX corresponding to the sidelink interface destination Layer-2 ID, and enter the active time of the SL DRX/DTX corresponding to the sidelink interface destination Layer-2 ID;
clean up the previously selected resource in a case that a next selected resource is outside the active time of the SL DRX/DTX corresponding to the sidelink interface destination Layer-2 ID;

perform the resource reselection within a time range of the first timer, and perform the data transmission on a newly selected resource.

29. The terminal device according to claim 18, wherein the active time of the SL DRX/DTX corresponding to the sidelink interface destination Layer-2 ID is comprised in a time range of any one running timer of the following timers: a first timer, a second timer and a third timer.

30. The terminal device according to any one of claims 23 to 26 or claim 29, wherein the first timer is an SL discontinuous reception on duration timer (drx-on duration TimerSL),

the second timer is an SL discontinuous reception inactivity timer (drx-Inactivity TimerSL),
the third timer is an SL discontinuous reception retransmission timer (drx-Retransmission TimerSL).

31. A terminal device, comprising:
a processing module, configured to: determine that a previously selected resource is outside an active time of a sidelink (SL) discontinuous reception/discontinuous transmission (DRX/DTX) corresponding to a sidelink interface destination Layer-2 ID; and determine to perform a resource selection or reselection.

32. A processor-readable storage medium, wherein the processor-readable storage medium stores a computer program, and the computer program is configured to be executed by a processor to implement the communication method for the sidelink interface according to any one of claims 1 to 17.

FIG. 1

FIG. 2

FIG. 3

determining that a selected resource is outside an active time of a sidelink (SL) discontinuous reception/discontinuous transmission (DRX/DTX) corresponding to a sidelink interface destination Layer-2 ID

S101

determining to perform resource selection or reselection

S102

FIG. 4

UE DRX/DTX
status when
there is no data

—off→ ↔ On
duration
timer
←————————off————————→ On
duration
timer
←——off——→

original
selected
resource

new
selected
resource

UE DRX/
DTX when
transmittin
g data

—off——→ On
duration
timer
←——Drx-inactivitytimer(SL)——→ ←——off——→ On
duration
timer
←——Drx-inactivitytimer(SL)——→

←→ RTT
timer
retx
timer(SL)

RTT
timer
retx
timer(SL)

T0 T1 T2    T3    T4    T5 T6 T7    T8    T9

FIG. 5

sending, by UE1, information to UE2 to activate DRX/DTX configuration — S201

entering, by UE1 and UE2, the activation state of SL DRX/DTX corresponding to the sidelink interface destination Layer-2 ID at time T0, where UE1 determines that the location of the time domain resource of the next selected resource is in the sleep period of DRX/DTX — S202

cleaning up the selected resource — S203

triggering resource reselection to select the resource within the active time of the SL DRX/DTX corresponding to the sidelink interface destination Layer-2 ID — S204

notifying the physical layer of the new selected resource and/or the resource reservation interval — S205

sending, by UE1, the data at the start time T1 of the new selected resource and starting the second timer — S206

starting the third timer based on the PSFCH receiving time T2 corresponding to the data transmitting time T1 — S207

stopping the third timer in a case that UE1 receives at time T3 the ACK message fed back by UE2 and confirming that the data is received — S208

entering, by UE1 and UE2, the sleep period of the SL DRX/DTX corresponding to the sidelink interface destination Layer-2 ID in a case that the second timer expires at time T4 — S209

entering, by UE1 and UE2, based on the cycle of DRX/DTX, the active time at time T5, starting the first timer, where UE1 has data to be transmitted, and the selected resource of UE1 is in the active time — S210

sending, by UE1, data at the start time T6 of the next new selected resource, and starting the second timer — S211

starting the third timer based on the PSFCH receiving time T7 corresponding to the data transmitting time T6 — S212

stopping the third timer in a case that UE1 receives at time T8 the ACK message fed back by UE2 and confirming that the data is received — S213

entering, by UE1 and UE2, the sleep period of the SL DRX/DTX corresponding to the sidelink interface destination Layer-2 ID in a case that the second timer expires at time T9 — S214

FIG. 6

FIG. 7

EP 4 319 283 A1

sending, by UE1, information to UE2 to activate DRX/DTX configuration — S301

↓

entering, by UE1 and UE2, the activation state of SL DRX/DTX corresponding to the sidelink interface destination Layer-2 ID at time T0, determining, by UE1, that the location of the time domain resource of the next selected resource is in the sleep period of DRX/DTX — S302

↓

cleaning up the selected resource — S303

↓

triggering resource reselection to select the resource within the active time of the SL DRX/DTX corresponding to the sidelink interface destination Layer-2 ID — S304

↓

notifying the physical layer of the new selected resource and/or the resource reservation interval — S305

↓

sending, by UE1, at the start time T1 of the new selected resource, the data and starting the second timer — S306

↓

starting the third timer based on the PSFCH receiving time T2 corresponding to the data transmitting time T1 — S307

↓

stopping the third timer in a case that UE1 receives at time T3 the ACK message fed back by UE2 and confirming that the data is received — S308

↓

at the start time T4 of the next new selected resource, if UE1 still has data to be transmitted, restarting the second timer — S309

↓

starting the third timer at time T4 — S310

↓

stopping the third timer in a case that UE1 receives at time T5 the ACK message fed back by UE2 and confirming that the data is received — S311

↓

UE1 has no data to be transmitted at time T6, the second timer expires, UE1 and UE2 enter a sleep period of SL DRX/DTX — S312

FIG. 8

FIG. 9

EP 4 319 283 A1

sending, by UE1, information to UE2 to activate a DRX/DTX configuration — S401

entering, by UE1 and UE2, the activation state of SL DRX/DTX corresponding to the sidelink interface destination Layer-2 ID at time T0, determining, by UE1, that the location of the time domain resource of the next selected resource is in the active time of DRX/DTX — S402

sending, by UE1, the data and starting the second timer at the start time T1 of the selected transmission resource — S403

starting the third timer based on the PSFCH receiving time T2 corresponding to the data transmitting time T1 — S404

stopping the third timer in a case that UE1 receives at time T3 the ACK message fed back by UE2 and confirming that the data is received — S405

entering, by UE1 and UE2, the sleep period of the SL DRX/DTX corresponding to the sidelink interface destination Layer-2 ID in a case that the second timer expires at time T4 — S406

entering, by UE1 and UE2, based on the DRX/DTX cycle, the active time at time T5, starting the first timer, where UE1 has data to be transmitted, and the selected resource of UE1 is in the sleep period — S407

cleaning up the selected resource — S408

triggering resource reselection, to select the resource within the time range of the first timer — S409

sending, by UE1, the data and starting The second timer at the start time T6 of the new selected resource — S410

starting the third timer based on the PSFCH receiving time T7 corresponding to the data transmitting time T6 — S411

stopping the third timer in a case that UE1 receives at time T8 the ACK message fed back by UE2 and confirming that the data is received — S412

entering, by UE1 and UE2, the sleep period of the SL DRX/DTX corresponding to the sidelink interface destination Layer-2 ID in a case that the second timer expires at time T9 — S413

entering, by UE1 and UE2, based on the DRX/DTX cycle, the active time at time T5, starting the first timer, where UE1 has data to be transmitted, and the selected resource of UE1 is in the active time — S414

sending, by UE1, data at the start time T11 of the next new selected resource, and starting the second timer — S415

starting the third timer based on the PSFCH receiving time T12 corresponding to the data transmitting time T11 — S416

stopping the third timer in a case that UE1 receives at time T13 the ACK message fed back by UE2 and confirming that the data is received — S417

entering, by UE1 and UE2, the sleep period of the SL DRX/DTX corresponding to the sidelink interface destination Layer-2 ID when the second timer expires at time T14 — S418

FIG. 10

FIG. 11

## INTERNATIONAL SEARCH REPORT

| International application No. |
|---|
| **PCT/CN2022/082804** |

### A. CLASSIFICATION OF SUBJECT MATTER

H04W 28/26(2009.01)i

According to International Patent Classification (IPC) or to both national classification and IPC

### B. FIELDS SEARCHED

Minimum documentation searched (classification system followed by classification symbols)

H04W; H04L; H04Q

Documentation searched other than minimum documentation to the extent that such documents are included in the fields searched

Electronic data base consulted during the international search (name of data base and, where practicable, search terms used)

CNABS; CNTXT; WPABS; WPABSC; ENTXT; ENTXTC; 3GPP; CNKI: 直接通信, 侧链路, 侧行链路, 边链路, 旁链路, 非连续接收, 激活, 静默, 选择, 重选, 资源, 资源池, 期间, 定时器D2D, V2V, V2X, P2P, sidelink, SL, DRX, DTX, activ+, on, inactiv+, off, select+, reselect+, resource, pool, duration, timer

### C. DOCUMENTS CONSIDERED TO BE RELEVANT

| Category* | Citation of document, with indication, where appropriate, of the relevant passages | Relevant to claim No. |
|---|---|---|
| X | VIVO. ""Uu and SL DRX impact to resource allocation mode 1 and mode 2""<br>*3GPP TSG-RAN WG2 Meeting #112 electronic, R2-2009834*, 23 October 2020 (2020-10-23), sections 1-3 | 1-32 |
| A | INTEL CORPORATION. ""On general sidelink DRX design""<br>*3GPP TSG RAN WG2 Meeting #112-e R2-2008978*, 23 October 2020 (2020-10-23), entire document | 1-32 |
| A | ZTE Corporation et al. ""Discussion on timer configuration for sidelink DRX""<br>*3GPP TSG-RAN WG2 Meeting #113-e R2-2100497*, 15 January 2021 (2021-01-15), entire document | 1-32 |
| A | Xiaomi communications. ""Discussion on sidelink DRX timer handling""<br>*3GPP TSG-RAN WG2 Meeting #112e R2-2010468*, 23 October 2020 (2020-10-23), entire document | 1-32 |
| A | CATT. ""Sidelink DRX Timer Maintainence and Active Time Definition""<br>*3GPP TSG-RAN WG2 Meeting #113 R2-2100236*, 15 January 2021 (2021-01-15), entire document | 1-32 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 June 2022** | **28 June 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| | International application No. |
|---|---|
| | **PCT/CN2022/082804** |

### C. DOCUMENTS CONSIDERED TO BE RELEVANT

| Category* | Citation of document, with indication, where appropriate, of the relevant passages | Relevant to claim No. |
|---|---|---|
| A | LG ELECTRONICS INC. ""Inter-UE coordination for NR V2X"" <br> *3GPP TSG-RAN WG2 Meeting #112 electronic R2-2010583*, 23 October 2020 (2020-10-23), <br> entire document | 1-32 |
| A | LENOVO et al. ""Discussion on sidelink resource allocation enhancements"" <br> *3GPP TSG-RAN WG2 Meeting #113 electronic R2-2101116*, 15 January 2021 (2021-01-15), <br> entire document | 1-32 |
| A | US 2021051653 A1 (COMCAST CABLE COMM L.L.C.) 18 February 2021 (2021-02-18) <br> entire document | 1-32 |
| A | CN 111417208 A (TELECOMMUNICATIONS TECHNOLOGY RESEARCH INSTITUTE <br> CO., LTD.) 14 July 2020 (2020-07-14) <br> entire document | 1-32 |

**INTERNATIONAL SEARCH REPORT**
Information on patent family members

International application No.

**PCT/CN2022/082804**

| Patent document cited in search report | | | Publication date (day/month/year) | Patent family member(s) | | | Publication date (day/month/year) |
|---|---|---|---|---|---|---|---|
| US | 2021051653 | A1 | 18 February 2021 | EP | 3780882 | A1 | 17 February 2021 |
| | | | | CA | 3090158 | A1 | 15 February 2021 |
| CN | 111417208 | A | 14 July 2020 | KR | 20210107815 | A | 01 September 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110362182